# EUROPÄISCHE PATENTANMELDUNG

(11) **EP 1 341 251 A1**
(43) Veröffentlichungstag der Anmeldung: **03.09.2003**
(21) Anmeldenummer: 02004599.3
(22) Anmeldetag: 28.02.2002
(51) Int. Cl.: H01M 8/24, H01M 8/10, H01M 8/02

(54) **PEM-Brennstoffzellenstapel**

(71) Anmelder: OMG AG & Co. KG, 63457 Hanau (DE)
(72) Erfinder: Zuber, Ralf, Dr., 63762 Grossostheim (DE); Kühnhold, Heike, 63486 Bruchköbel (DE); Bayer, Armin, 63579 Freigericht (DE); Dziallas, Holger, Dr., 59469 Ense (DE)
(74) Vertreter: VOSSIUS & PARTNER

(57) **Zusammenfassung**

Die Erfindung betrifft einen PEM-Brennstoffzellenstapel aus einer oder mehreren übereinander angeordneten Brennstoffzellen (1), die jeweils eine Membran-Elektrodeneinheit (2) und elektrisch leitfähige Bipolarplatten (3, 4) enthalten, wobei die Membran-Elektrodeneinheiten jeweils eine Polymerelektrolyt-Membran (5) aufweisen, die auf jeder Seite jeweils mit einer Reaktionsschicht (6, 7) in Kontakt steht, wobei die Reaktionsschichten eine geringere flächige Ausdehnung als die Polymerelektrolyt-Membran besitzen und zwischen jeder Reaktionsschicht und den angrenzenden Bipolarplatten im wesentlichen deckungsgleich zu den Reaktionsschichten jeweils eine kompressible, grobporige Gasverteilerschicht (8, 9) aus Kohlefaservliesstoff angeordnet ist und im Bereich außerhalb der durch die Gasverteilerschichten abgedeckten Fläche Dichtungen (11, 12) eingefügt sind, wobei die durch die Reaktionsschichten und die Gasverteilerschichten gebildeten Gasdiffusionselektroden im unbelasteten Zustand eine Dicke D₁ und die Dichtungen eine Dicke D₂ aufweisen. Der PEM-Brennstoffzellenstapel ist dadurch gekennzeichnet, daß die Gasdiffusionselektroden im PEM-Brennstoffzellenstapel auf 50 bis 85 % ihrer ursprünglichen Dicke komprimiert sind (Kompressionsfaktor k = 0,5 bis 0,85) und die Gasverteilerschichten auf der jeweils den Reaktionsschichten zugewandten Seiten nicht mit einer Ausgleichsschicht beschichtet sind.

## Beschreibung

Die Erfindung betrifft einen PEM-Brennstoffzellenstapel aus übereinander gestapelten Membran-Elektrodeneinheiten, Gasverteilerschichten und Bipolarplatten. Insbesondere betrifft die Erfindung solche PEM-Brennstoffzellenstapel, die Gasverteilerschichten aus Kohlefaservliesen ("nonwovens") enthalten.

Brennstoffzellen wandeln einen Brennstoff und ein Oxidationsmittel örtlich voneinander getrennt an zwei Elektroden in Strom, Wärme und Wasser um. Als Brennstoff kann Wasserstoff oder ein wasserstoffreiches Gas, als Oxidationsmittel Sauerstoff oder Luft dienen. Der Vorgang der Energieumwandlung in der Brennstoffzelle zeichnet sich durch einen besonders hohen Wirkungsgrad aus. Aus diesem Grunde gewinnen Brennstoffzellen in Kombination mit Elektromotoren zunehmend Bedeutung als Alternative für herkömmliche Verbrennungskraftmaschinen.

Die sogenannte Polymerelektrolyt-Brennstoffzelle (PEM-Brennstoffzelle) eignet sich aufgrund ihrer kompakten Bauweise, ihrer Leistungsdichte sowie ihres hohen Wirkungsgrades für den Einsatz als Energiewandler in Elektroautomobilen.

Unter einem PEM-Brennstoffzellenstapel wird im Rahmen dieser Erfindung eine stapelweise Anordnung ("Stack") von Brennstoffzellen-Einheiten verstanden. Eine Brennstoffzellen-Einheit wird im folgenden auch kurz als Brennstoffzelle bezeichnet. Sie enthält jeweils eine Membran-Elektrodeneinheit (MEE), die zwischen bipolaren Platten, auch als Separatorplatten bezeichnet, zur Gaszufuhr und Stromleitung angeordnet ist. Eine Membran-Elektrodeneinheit besteht aus einer Polymerelektrolyt-Membran, die auf beiden Seiten mit Reaktionsschichten versehen ist. Eine der Reaktionsschichten ist als Anode für die Oxidation von Wasserstoff und die zweite Reaktionsschicht als Kathode für die Reduktion von Sauerstoff ausgebildet. Auf die Reaktionsschichten werden sogenannte Gasverteilerschichten aus Kohlefaservlies, Kohlefaserpapier oder Kohlefasergewebe aufgebracht, die einen guten Zugang der Reaktionsgase zu den Elektroden und eine gute Ableitung des Zellenstroms ermöglichen. Die zweischichtige Kombination aus Reaktionsschicht und Gasverteilerschicht wird auch als Gasdiffusionselektrode bezeichnet. Anode und Kathode enthalten sogenannte Elektrokatalysatoren, die die jeweilige Reaktion (Oxidation von Wasserstoff beziehungsweise Reduktion von Sauerstoff) katalytisch unterstützen. Als katalytisch aktive Komponenten werden bevorzugt die Metalle der Platingruppe des Periodensystems der Elemente eingesetzt. In der Mehrzahl werden sogenannte Trägerkatalysatoren verwendet, bei denen die katalytisch aktiven Platingruppenmetalle in hochdisperser Form auf die Oberfläche eines leitfähigen Trägermaterials aufgebracht wurden. Die mittlere Kristallitgröße der Platingruppenmetalle liegt dabei etwa zwischen 1 und 10 nm. Als Trägermaterialien haben sich feinteilige Ruße bewährt.

Die Polymerelektrolyt-Membran besteht aus Protonen leitenden Polymermaterialien. Diese Materialien werden im folgenden auch kurz als Ionomer bezeichnet. Bevorzugt wird ein Tetrafluorethylen-Fluorvinylether-Copolymer mit Säurefunktionen, insbesondere Sulfonsäuregruppen, verwendet. Ein solches Material wird zum Beispiel unter dem Handelsnamen Nafion® von E.I. DuPont vertrieben. Es sind jedoch auch andere, insbesondere fluorfreie Ionomermaterialien, wie sulfonierte Polyetherketone oder Arylketone oder Polybenzimidazole einsetzbar.

Für den breiten kommerziellen Einsatz von PEM-Brennstoffzellen in Kraftfahrzeugen ist eine weitere Verbesserung der elektrochemischen Zellenleistung sowie eine deutliche Verminderung der Systemkosten notwendig.

Eine wesentliche Voraussetzung für eine Steigerung der Zellenleistung ist eine optimale Zu- und Abfuhr der jeweiligen Reaktivgasmischungen zu und von den katalytisch aktiven Zentren der Katalysatorschichten. Neben der Zufuhr von Wasserstoff zur Anode muß das Ionomermaterial der Anode ständig durch Wasserdampf (Befeuchtungswasser) befeuchtet werden, um eine optimale Protonenleitfähigkeit zu gewährleisten. Das an der Kathode gebildete Wasser (Reaktionswasser) muß kontinuierlich abgeführt werden, um eine Flutung des Porensystems der Kathode und damit eine Behinderung der Versorgung mit Sauerstoff zu vermeiden.

Die US-PS 4,293,396 beschreibt eine Gasdiffusionselektrode, die aus einem offenporigen leitfähigen Kohlefasergewebe besteht. Die Poren des Kohlefasergewebes enthalten eine homogene Mischung aus katalysierten Kohlenstoffpartikeln (mit katalytisch aktiven Komponenten beschichtete Kohlenstoffpartikel) und hydrophoben Partikeln eines Bindermaterials.

In der EP 0 869 568 A1 wird eine Gasverteilerschicht aus einem Kohlefasergewebe für Membran-Elektrodeneinheiten beschrieben. Zur Verbesserung des elektrischen Kontaktes zwischen den Katalysatorschichten der Membran-Elektrodeneinheiten und dem Kohlefasergewebe der Gasverteilerschichten wird das Kohlefasergewebe auf der der jeweiligen Katalysatorschicht zugewandten Seite mit einer Ausgleichsschicht aus Ruß und einem Fluorpolymer beschichtet, die porös und wasserabstoßend und zugleich elektrisch leitend ist und außerdem eine einigermaßen glatte Oberfläche besitzt. Bevorzugt dringt diese Ausgleichsschicht nicht mehr als bis zur Hälfte in das Kohlefasergewebe ein. Das Kohlefasergewebe kann zur Verbesserung seiner wasserabstoßenden Eigenschaften mit einer Mischung aus Ruß und einem Fluorpolymer vorbehandelt werden.

In der WO 97/13287 wird eine Gasverteilerschicht (hier "intermediate layer") beschrieben, die durch Infiltrieren und/oder Beschichten einer Seite eines grobporigen Kohlenstoffsubstrates (Kohlepapier, Graphitpapier oder Kohlefilz) mit einer Zusammensetzung aus Ruß und einem Fluorpolymer erhältlich ist, die die Porosität eines oberflächennahen . Teils des Kohlenstoffsubstrates vermindert und/oder eine diskrete Schicht verminderter Porosität auf der Oberfläche des Substrates bildet. Die Gasverteilerschicht wird mit dieser Beschichtung auf die Katalysatorschichten von Membran-Elektrodeneinheiten aufgelegt. Dabei ist es wie in der EP 0 869 568 A1 unter anderem Aufgabe der Beschichtung, einen guten elektrischen Kontakt zu den Katalysatorschichten herzustellen.

Die Beschichtung der Gasverteilerschichten entsprechend WO 97/13287, US 4,293,396, DE 195 44 323 A1 und der EP 0 869 568 mit einer Ruß/PTFE-Mischung ist aufwendig und erfordert eine abschließende Trocknung und Calcination bei 330 bis 400 °C.

Die US 6,007,933 beschreibt eine Brennstoffzellen-Einheit aus übereinander gestapelten Membran-Elektrodeneinheiten und Bipolarplatten. Zwischen den Membran-Elektrodeneinheiten und den Bipolarplatten sind elastische Gasverteilerschichten angeordnet. Zur Versorgung der Membran-Elektrodeneinheiten mit Reaktivgasen weisen die Bipolarplatten auf ihren den Gasverteilerschichten zugewandten Kontaktflächen einseitig offene Gasverteilungskanäle auf. Die Brennstoffzellen-Einheit wird zur Verbesserung des elektrischen Kontaktes zwischen den Gasverteilerschichten und den Membran-Elektrodeneinheiten unter Druck zusammengebaut. Dabei besteht die Gefahr, daß die elastischen Gasverteilerschichten in die einseitig offenen Gasverteilungskanäle eindringen und somit den Gastransport behindern und die elektrische Leistung der Brennstoffzelle beeinträchtigen. Dies wird gemäß der US 6,007,933 zum Beispiel durch gelochte Trägerbleche verhindert, die zwischen Gasverteilerschichten und Bipolarplatten gelegt werden. Zur Abdichtung der Membran-Elektrodeneinheiten werden O-Ring Dichtungen und Dichtungen aus PTFE-Folien verwendet.

Lee et al. (Lee et al. "The effects of compression and gas diffusion layers on the performance of a PEM fuel cell"; Journal of Power Sources 84(1999) 45 bis 51) untersuchten den Einfluß des Kompressionsdrucks beim Zusammenbau von Brennstoffzellen auf die Leistung der Brennstoffzellen. Als Gasverteilerschichten wurden steife Kohlefaserpapiere von Toray sowie Kohlefasergewebe CARBEL® und ELAT® verwendet. Das Kohlefaserpapier von Toray zerbricht bei einem zu hohen Kompressionsdruck und ist somit wenig geeignet. Bei den genannten Kohlefasergeweben handelt es sich um käufliche Produkte, die jeweils mit einer Ausgleichsschicht ausgerüstet sind.

Es ist Aufgabe der vorliegenden Erfindung, einen Brennstoffzellenstapel anzugeben, welcher gegenüber dem Stand der Technik einen vereinfachten Aufbau bei gleicher oder besserer elektrischer Leistung aufweist.

Weiterhin war es Aufgabe der vorliegenden Erfindung, die hierfür geeigneten Gasverteilerschichten bereitzustellen.

Diese Aufgabe wird durch einen PEM-Brennstoffzellenstapel aus einer oder mehreren übereinander angeordneten Brennstoffzellen (1) gelöst, die jeweils eine Membran-Elektrodeneinheit (2) und elektrisch leitfähige Bipolarplatten (3, 4) enthalten, wobei die Membran-Elektrodeneinheiten jeweils eine Polymerelektrolyt-Membran (5) aufweisen, die auf jeder Seite jeweils mit einer Reaktionsschicht (6, 7) in Kontakt steht, wobei die Reaktionsschichten eine geringere flächige Ausdehnung als die Polymerelektrolyt-Membran besitzen und zwischen jeder Reaktionsschicht und den angrenzenden Bipolarplatten im wesentlichen deckungsgleich zu den Reaktionsschichten jeweils eine kompressible, grobporige Gasverteilerschicht (8, 9) aus Kohlefaservliesstoff angeordnet ist und im Bereich außerhalb der durch die Gasverteilerschichten abgedeckten Fläche Dichtungen (11, 12) eingefügt sind, wobei die durch die Reaktionsschichten und die Gasverteilerschichten gebildeten Gasdiffusionselektroden im unbelasteten Zustand eine Dicke D₁ und die Dichtungen eine Dicke D₂ aufweisen. Der PEM-Brennstoffzellenstapel ist dadurch gekennzeichnet, daß die Gasdiffusionselektroden im PEM-Brennstoffzellenstapel auf 50 bis 85 % ihrer ursprünglichen Dicke komprimiert sind (Kompressionsfaktor k = 0,5 bis 0,85) und die Gasverteilerschichten auf der jeweils den Reaktionsschichten zugewandten Seiten nicht mit einer Ausgleichsschicht beschichtet sind.

Erfindungsgemäß werden die Gasdiffusionselektroden der Brennstoffzellen beim Zusammenbau zu einem Brennstoffzellenstapel auf 50 bis 85, bevorzugt auf 60 bis 70 % ihrer ursprünglichen Dicke komprimiert. Die Dicke D₁ einer Gasdiffusionselektrode setzt sich aus der Dicke der Gasverteilerschicht und der Dicke der Reaktionsschicht zusammen. Wegen der größeren Dicke der Gasverteilerschicht (ca. 200 bis 400 µm) gegenüber der Dicke der Reaktionsschicht (ca. 5 bis 100 µm; in der Regel 5 bis 30 µm) und ihrer in der Regel größeren Kompressibilität wird der Löwenanteil der Kompression von der Gasverteilerschicht getragen.

Der hier definierte Kompressionsfaktor k beschreibt die Verminderung der Dicke der Gasdiffusionselektroden auf einen bestimmten Wert durch die Komprimierung. Je kleiner der Kompressionsfaktor ist, um so stärker müssen die Gasdiffusionselektroden beim Zusammenbau des Brennstoffzellenstapels komprimiert werden. Bei k = 0,5 müssen die Gasdiffusionselektroden auf die Hälfte ihrer Dicke D1 im unbelasteten Zustand zusammengedrückt werden.

Die Einstellung eines definierten Kompressionsfaktors k der Gasdiffusionselektroden in einem Brennstoffzellenstapel garantiert durch seine obere Grenze von maximal 0,85 noch einen ausreichenden elektrischen Kontakt zwischen Reaktionsschicht und Gasverteilerschicht. Durch die festgelegte untere Grenze von 0,5, bevorzugt von 0,6, wird verhindert, daß die Kohlefasern der Gasverteilerschicht durch zu starke Kompression die Polymerelektrolyt-Membran durchstoßen und damit die Leistungsfähigkeit der Brennstoffzelle beeinträchtigen oder sie sogar völlig unbrauchbar machen.

An den Durchstoßstellen kann Wasserstoff direkt von der Anode zur Kathode gelangen und dort mit dem Sauerstoff reagieren. Das führt zu einer lokalen Wärmeentwicklung, zu sogenannten Hotspots. Den Beginn einer solchen Schädigung erkennt man an einem Absinken der offenen Zellspannung ohne elektrische Last auf unter 900 mV im Reformatbetrieb oder 930 mV im Wasserstoffbetrieb. Die Durchstoßlöcher, beziehungsweise die dünnen Stellen der Membran, vergrößern sich durch die Wärmeentwicklung und führen zum Totalausfall der betroffenen Zelle.

Durch die definierte Kompression der Gasdiffusionselektroden wird auch die Porosität der Gasverteilerschichten auf 50 bis 85 %, beziehungsweise auf 60 bis 70 %, ihrer ursprünglichen Porosität vermindert, so daß eine Flutung der Poren durch Reaktionswasser vermieden wird. Dies führt zu einer deutlichen Verbesserung der elektrischen Leistung des Brennstoffzellenstapels. Allerdings wirkt sich eine zu starke Kompression mit einem Kompressionsfaktor unter 0,5 negativ auf die Gastransporteigenschaften der Gasverteilerschichten aus und vermindert die Leistung im Bereich hoher Stromdichten.

Es wurde gefunden, daß bei richtiger Wahl des Kompressionsfaktors auf eine Beschichtung der Gasverteilerschicht mit einer sogenannten Ausgleichsschicht aus Ruß und einem hydrophoben Polymer verzichtet werden kann. Diese Ausgleichsschicht hat bei den bekannten Brennstoffzellenstapeln einerseits die Aufgabe, einen guten Kontakt zwischen Reaktionsschicht und Gasverteilerschicht herzustellen und andererseits die Aufgabe, die Oberfläche der Gasverteilerschicht zu glätten und ein Durchstoßen der Polymerelektrolyt-Membran durch die Fasern des Kohlefaservliesstoffes zu verhindern. Durch den Verzicht auf die Ausgleichsschichten bei gleichzeitig geeigneter Kompression des Brennstoffzellenstapel kann die Zellenleistung deutlich gegenüber Brennstoffzellenstapel mit konventionellem Aufbau verbessert werden. Der für diesen Zweck geeignete Kompressionsfaktor liegt im Bereich zwischen 0,5 und 0,85, bevorzugt zwischen 0,6 und 0,7.

Die definierte Kompression kann in einfacher Weise durch Verwendung von Dichtungen aus inkompressiblem Material eingestellt werden, deren Dicke D₂ kleiner ist als die Dicke D₁ der kompressiblen Gasdiffusionselektroden im unbelasteten Zustand. Beim Zusammenbau des Brennstoffzellenstapels werden die kompressiblen Gasdiffusionselektroden bis auf die Dicke der Dichtungen zusammengepreßt, so daß sich für die Komprimierung der Gasdiffusionselektroden ein Kompressionsfaktor k=D₂/D₁ ergibt. Als inkompressibel werden im Rahmen dieser Erfindung Materialien oder Materialverbunde bezeichnet, deren Kompressibilität weniger als 5%, bevorzugt weniger als 1% der Kompressibilität der Gasverteilerschichten beträgt. Bevorzugt werden Dichtungen aus Polytetrafluorethylen (PTFE) eingesetzt, die durch Armierung mit Glasfasern der obigen Bedingung genügen.

Durch die Verwendung der inkompressiblen Dichtungen gestaltet sich der Zusammenbau des Brennstoffzellenstapels sehr einfach und erlaubt eine genaue und reproduzierbare Einstellung des Kompressionsfaktors k, da die Gasdiffusionselektroden lediglich auf die Dicke der inkompressiblen Dichtungen zusammengepreßt werden müssen. Eine genaue Einstellung des Anpreßdruckes ist nicht notwendig.

Die inkompressiblen Dichtungen können mit verschiedenen Dicken bezogen werden. Es kann jedoch vorkommen, daß zur Einstellung eines bestimmten Kompressionsfaktors eine Dichtung mit einer geeigneten Dicke nicht zur Verfügung steht. In diesem Fall besteht die Möglichkeit, eine gewünschte Dicke der Dichtung durch Kombination einer dickeren und einer dünneren Dichtung exakt einzustellen oder zumindest anzunähern. Die Dichtungen auf der Kathodenseite und auf der Anodenseite weisen dann verschiedene Schichtdicken D_{Kathode} (D_{K}) und D_{Anode} (D_{A}) auf. Der Kompressionsfaktor der Gasdiffusionselektroden ist dann durch k = (D_{A} + D_{K})/2D₁ gegeben. Es besteht auch die Möglichkeit, eine gewünschte Dicke der Dichtung durch Übereinanderstapeln zweier oder mehrerer Dichtungen zusammenzustellen.

Wie schon erläutert wurde, ist es besonders vorteilhaft, daß durch die definierte Kompression der Gasverteilerschichten die sonst übliche Ausrüstung der Gasverteilerschichten mit einer elektrisch leitfähigen Ausgleichsschicht und die damit verbundenen aufwendigen Arbeitsschritte entfallen können. Darüber hinaus kann auch auf den Einsatz spezieller Trägerbleche, die ein Eindringen der Kohlefaservliesstoffe der Gasverteilerschichten in die Strömungskanäle der Bipolarplatten verhindern sollen, verzichtet werden.

Die erfindungsgemäßen PEM-Brennstoffzellenstapel weisen einen guten Zugang der Reaktivgase zu den katalytisch aktiven Zentren der Membran-Elektrodeneinheiten, eine effektive Befeuchtung des Ionomers in den Katalysatorschichten und der Membran und den problemlosen Abtransport des Reaktionsprodukts Wasser von der Kathodenseite der Membran-Elektrodeneinheiten auf.

Zur Herstellung der erfindungsgemäßen Gasverteilerschichten können kommerzielle, grobporige Kohlefaservliesstoffe mit Porositäten von 50 bis 95 % verwendet werden. Hier gibt es verschiedene Grundmaterialien, die sich in Struktur, Herstellungsverfahren und Eigenschaften unterscheiden. Beispiele für solche Materialien sind SIGRACET GDL 10-P von SGL Carbon Group oder Panex 33 CP von Zoltek, Inc.

Die kommerziellen, grobporigen Kohlefaservliesstoffe können vor dem Einsatz mit einem hydrophoben Polymer imprägniert werden. Geeignete hydrophobe Polymere sind Polyethylen, Polypropylen, Polytetrafluorethylen oder andere organische oder anorganische, hydrophobe Materialien. Bevorzugt werden Suspensionen von Polytetrafluorethylen oder Polypropylen zur Imprägnierung eingesetzt. Die Beladung der Kohlefasersubstrate mit einem hydrophoben Polymer kann je nach Anwendungsfall zwischen 3 und 25 Gew.-% liegen. Besonders bewährt haben sich Beladungen zwischen 4 und 20 Gew.-%. Dabei kann die Beladung der Gasverteilerschichten von Anode und Kathode unterschiedlich sein. Die imprägnierten Kohlefasersubstrate werden unter starkem Luftaustausch bei Temperaturen bis 250 °C getrocknet. Besonders bevorzugt ist die Trocknung in einem Umlufttrockenschrank bei 60 bis 220, bevorzugt bei 80 bis 140 °C. Anschließend erfolgt die Sinterung des hydrophoben Polymers. Dies erfolgt zum Beispiel bei PTFE bei einer Temperatur von 330 bis 400 °C.

Die folgenden Beispiele und Figuren verdeutlichen das Wesen der Erfindung. Es zeigen:
- **Figur 1:**: Querschnitt durch eine Brennstoffzellen-Einheit, die eine Membran-Elektrodeneinheit enthält.
- **Figur 2:**: Aufsicht auf eine Bipolarplatte mit aufgelegter Gasverteilerschicht und Dichtung
- **Figur 3:**: Zellspannung in Abhängigkeit von der Stromdichte bei Reformat/Luftbetrieb für die MEE von Beispiel 2, Vergleichsbeispiel 1 und Vergleichsbeispiel 2.
- **Figur 4:**: Zellspannung in Abhängigkeit von der Stromdichte bei Reformat/Luftbetrieb für die MEE von Beispiel 1, Beispiel 2, Beispiel 3, Vergleichsbeispiel 3 und Vergleichsbeispiel 4.

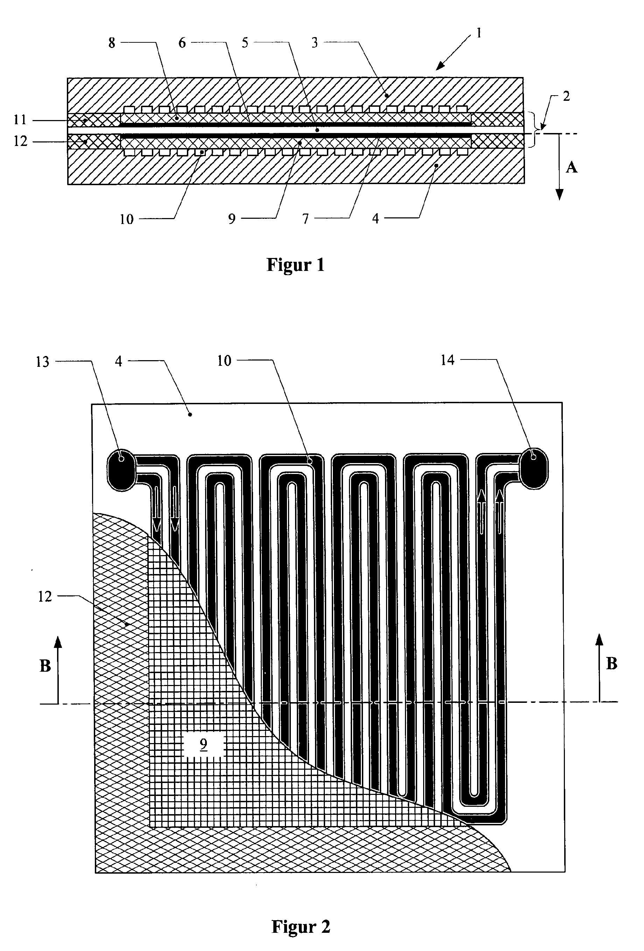

Figur 1 zeigt einen Querschnitt durch einen PEM-Brennstoffzellenstapel (1), welcher der besseren Übersichtlichkeit wegen nur eine Membran-Elektrodeneinheit (2) enthält. (5) bezeichnet die Polymerelektrolyt-Membran, die auf beiden Seiten mit einer Reaktions- oder Katalysatorschicht (6) und (7) in Kontakt steht. Die flächige Ausdehnung der Katalysatorschichten ist kleiner als die der Membran, so daß die Polymerelektrolyt-Membran nach allen Seiten über die Katalysatorschichten hinausragt und somit einen beschichtungsfreien Rand bildet. Zwischen jeder Reaktionsschicht und den angrenzenden Bipolarplatten befindet sich im wesentlichen deckungsgleich zu den Reaktionsschichten jeweils eine kompressible, grobporige Gasverteilerschicht (8, 9) aus Kohlefaservliesstoff. "Im wesentlichen deckungsgleich" bedeutet hier, daß die Gasverteilerschichten gleich groß oder etwas größer sind als die zugeordneten Reaktionsschichten. Die lateralen Abmessungen der Gasverteilerschichten können um 1 bis 2 mm größer sein als die der Reaktionsschichten. Auf die Gasverteilerschichten sind von beiden Seiten die Bipolarplatten (3,4) mit den Gasverteilungskanälen (10) aufgelegt. Zur Abdichtung der Membran-Elektrodeneinheit aus Polymerelektrolyt-Membran, Katalysatorschichten und Gasverteilerschichten sind Dichtungen (11 und 12) mit einem zentralen Ausschnitt vorgesehen. Der zentrale Ausschnitt der Dichtungen ist an die lateralen Abmessungen der Gasverteilerschichten angepaßt ist.

Als Dichtungen (11 und 12) werden bevorzugt inkompressible Polymerfolien oder Polymerkompositfolien wie zum Beispiel glasfaserverstärkte PTFE-Folien verwendet. Beim Zusammenbau des Brennstoffzellenstapels wird der gesamte Stapel durch Verschrauben in Richtung senkrecht zur Polymerelektrolyt-Membran zusammengepreßt. Die Gesamtdicke der Dichtungsfolien wird deshalb so gewählt, daß nach dem Zusammenbau die kompressiblen Gasdiffusionselektroden aus Reaktionsschichten und Gasverteilerschichten im geforderten Maße komprimiert vorliegen.

Zur Einstellung bestimmter Dichtungsstärken können mehrere Dichtungsfolien mit unterschiedlicher Dicke eingesetzt werden. Dabei können auch verschiedene Gesamtdicken auf der Anoden- und Kathodenseite (D_{A}, D_{K}) verwendet werden. Auf Grund der Flexibilität der Membran führt dies zu einem mittleren Kompressionsfaktor k = (D_{A} + D_{K})/2·D₁.

Figur 2 zeigt eine Aufsicht auf die Bipolarplatte (4) entsprechend Figur 1, Ansicht A, mit aufgelegter Gasverteilerschicht (9) und Dichtung (12). Gasverteilerschicht (9) und Dichtung (12) sind in der Aufsicht nur zum Teil gezeichnet und lassen den Blick frei auf die Kanalstruktur der Bipolarplatte. Die Gasverteilungskanäle (10) sind in einer doppelten Serpentinenstruktur angeordnet und verbinden den Zuflußkanal (13) mit dem Abflußkanal (14), die beide senkrecht durch den Zellenstapel führen. Der Querschnitt des PEM-Brennstoffzellenstapels gemäß Figur 1 entspricht dem Schnitt B-B von Figur 2.

Die folgenden Beispiele und Vergleichsbeispiele sollen die Erfindung dem Fachmann weiter erläutern.

### Vergleichsbeispiel 1:

Dieses Beispiel beschreibt eine nicht erfindungsgemäße Ausführungsform unter Verwendung eines Gasverteilersubstrates mit einer Ruß/PTFE-Ausgleichsschicht.

Kohlefaservlies vom Typ SIGRACET GDL 10 von SGL Carbon Group mit einem Flächengewicht von 115 g/m² und einer Dicke von 380 µm wurde in eine Suspension von PTFE (Polytetrafluorethylen) in Wasser (Hostaflon TF5235, Dyneon GmbH) getaucht. Nach wenigen Sekunden wurde das Material herausgenommen. Nach dem Ablaufen der oberflächlich anhaftenden Suspension wurde das Kohlefaservlies im Umluft-Trockenschrank bei 110 °C getrocknet. Zum Verschmelzen des in die Struktur des Kohlefaservlieses eingebrachten PTFE wurde es in einem Kammerofen bei 340 bis 350 °C für die Dauer von ca. 15 Minuten calciniert.

Anschließend wurden diese Kohlefaservliese mit einer Paste aus Ruß Vulcan XC-72 und PTFE beschichtet, getrocknet und wiederum calciniert. Das Verhältnis der Gewichtsanteile von Ruß und PTFE war 7 : 3. Die Auftragsstärke der getrockneten und calcinierten Paste betrug 3,2 ± 0,2 mg/cm².

Die mittlere Dicke der fertigen Kohlefaservliese betrug 400 µm.

Diese Anoden- und Kathoden-Gasverteilerschichten wurden zusammen mit einer Membran-Elektrodeneinheit, in eine Brennstoffzellen-Prüfzelle mit doppelter Serpentinenstruktur eingebaut. Beim Zusammenbau der Prüfzelle wurden die Bipolarplatten mit einem Drehmoment von 8 Nm so stark miteinander verschraubt, daß die Gasverteilerschichten inklusive der jeweiligen Katalysatorschicht auf die Dicke der Dichtungen zusammengepreßt wurden.

Als Dichtungen wurden mehrere Chemglas-Dichtungen (inkompressibles, glasfaserverstärktes PTFE) mit einer Gesamtdicke von 0,50 mm (Anode u. Kathode je 1 x 0,25 mm) verwendet. Zusammen mit einer Dicke der Katalysatorschicht von jeweils 25 µm errechnet sich daraus eine Komprimierung der Gasdiffusionselektroden auf 58,8 % der ursprünglichen Dicke (k = 0,588).

Die hier verwendete mit Katalysator beschichtete Membran wurde entsprechend US-PS 6,309,772, Beispiel 3, Tinte A, angefertigt. Als Katalysatoren wurden 40 Gew.-% Pt auf Vulcan XC72 für die Kathodenseite und 40 Gew.-% PtRu (1:1) auf Vulcan XC72 für die Anodenseite eingesetzt. Das Verhältnis von Katalysator zu Ionomer betrug 3 : 1.

Die Polymerelektrolyt-Membran und das Ionomer für die Reaktionsschichten wurden jeweils in ihrer nicht-azidischen Form eingesetzt und nach Abschluß des Herstellungsprozesses wieder mit Hilfe von Schwefelsäure in ihre azidische, Protonen leitende Modifikation überführt.

Zur Bildung der Kathodenschicht wurde die Kathoden-Tinte im Siebdruckverfahren auf eine Nafion® 112-Membran (Dicke 50 µm) in der Na⁺-Form aufgedruckt und bei 90 °C getrocknet. Anschließend wurde die Rückseite der Membran zur Bildung der Anodenschicht auf die gleiche Weise mit der Anoden-Tinte beschichtet. Die Rück-Protonierung erfolgte in 0,5 M Schwefelsäure. Die Platinbeladung der Kathodenschicht betrug 0,4 mg Pt/cm², die der Anodenschicht 0,3 mg Pt/cm². Das entsprach einer Gesamtbeladung der beschichteten Membran mit Platin von 0,7 mg/cm². Die Schichtdicken lagen im Bereich zwischen 15 und 20 µm. Die bedruckte Fläche betrug jeweils 50 cₘ².

### Vergleichsbeispiel 2:

Dieses Beispiel beschreibt eine nicht erfindungsgemäße Ausführungsform unter Verwendung eines Gasverteilersubstrates mit Ruß/PTFE-Ausgleichsschicht.

Sämtliche Behandlungsschritte des Kohlefaservliesstoffes vom Typ SIGRACET GDL 10 von SGL Carbon Group wurden analog zu Vergleichsbeispiel 1 durchgeführt. Die so behandelten Gasverteilerschichten wurden zusammen mit einer mit Katalysator beschichteten Membran entsprechend Vergleichsbeispiel 1, in eine Brennstoffzellen-Prüfzelle mit doppelter Serpentinenstruktur eingebaut. Beim Zusammenbau der Prüfzelle wurden die Bipolarplatten mit einem Drehmoment von 8 Nm so stark miteinander verschraubt, daß die Gasverteilerschichten inklusive der jeweiligen Katalysatorschicht auf die Dicke der Dichtungen zusammengepreßt wurden.

Als Dichtungen wurden mehrere Chemglas-Dichtungen (inkompressibles, glasfaserverstärktes PTFE) mit einer Gesamtdicke von 0,60 mm (Anode: 2 x 0,15 mm, Kathode: 1 x 0,25 mm + 1 x 0,05 mm) verwendet. Zusammen mit einer Dicke der Katalysatorschicht von jeweils 25 µm errechnet sich daraus eine Komprimierung der Gasdiffusionselektroden auf 70,6 % der ursprünglichen Dicke (k = 0,706).

### Vergleichsbeispiel 3:

Dieses Beispiel beschreibt eine Ausführungsform unter Verwendung von Gasdiffusionselektroden ohne Ruß/PTFE-Ausgleichsschicht, wobei jedoch der Kompressionsfaktor k oberhalb des erfindungsgemäßen Bereiches liegt (geringe Kompression).

Kohlefaservlies vom Typ SIGRACET GDL 10 von SGL Carbon Group mit einem Flächengewicht von 115 g/m² und einer Dicke von 400 µm wurde in eine Suspension von PTFE in Wasser (Hostaflon TF5235, Dyneon GmbH) getaucht. Nach wenigen Sekunden wurde das Material herausgenommen. Nach dem Ablaufen der oberflächlich anhaftenden Suspension wurde das Kohlefaservlies im Umluft-Trockenschrank bei 110 °C getrocknet. Zum Verschmelzen des in die Struktur eingebrachten PTFE wurde das imprägnierte Kohlefaservlies in einem Kammerofen bei 340 bis 350 °C ca. 15 Minuten lang calciniert.

Die mittlere Dicke der fertigen Kohlefaservliese betrug 400 µm.

Diese Gasverteilerschichten wurden zusammen mit einer mit Katalysator beschichteten Membran entsprechend Vergleichsbeispiel 1, in eine Brennstoffzellen-Prüfzelle mit doppelter Serpentinenstruktur eingebaut. Beim Zusammenbau der Prüfzelle wurden die Bipolarplatten mit einem Drehmoment von 8 Nm so stark miteinander verschraubt, daß die Gasverteilerschichten inklusive der jeweiligen Katalysatorschicht (= Reaktionsschicht) auf die Dicke der Dichtungen zusammengepreßt wurden.

Als Dichtungen wurden mehrere Chemglas-Dichtungen (inkompressibles, glasfaserverstärktes PTFE) mit einer Gesamtdicke von 0,84 mm (Anode: 1 x 0,32 mm + 1 x 0,2 mm, Kathode: 1 x 0,32 mm) verwendet. Zusammen mit einer Dicke der Katalysatorschichten von jeweils 25 µm errechnet sich daraus eine Komprimierung der Gasdiffusionselektroden auf 98,8% der ursprünglichen Dicke (k = 0,988).

### Vergleichsbeispiel 4:

Vergleichsbeispiel 3 wurde wiederholt, jedoch wurde die Dicke der Dichtungen auf einen Wert von 0,35 mm (Anode: 1 x 0,15 mm, Kathode: 1 x 0,2 mm) vermindert.

Beim Zusammenbau der Prüfzelle wurden die Bipolarplatten mit einem Drehmoment von 8 Nm so stark miteinander verschraubt, daß die Gasverteilerschichten inklusive der jeweiligen Katalysatorschicht auf die Dicke der Dichtungen zusammengepreßt wurden. Zusammen mit einer Dicke der Katalysatorschicht von jeweils 25 µm errechnet sich daraus eine Komprimierung der Gasdiffusionselektroden auf 41,7 % der ursprünglichen Dicke (k = 0,417).

### Beispiel 1:

Sämtliche Behandlungsschritte des Kohlefaservliesstoffes vom Typ SIGRACET GDL 10 von SGL Carbon Group wurden analog zu Vergleichsbeispiel 3 durchgeführt. Diese Anoden- und Kathoden-Gasverteilerschichten wurden zusammen mit einer katalysatorbeschichteten Membran entsprechend Vergleichsbeispiel 1, in eine Brennstoffzellen-Prüfzelle mit doppelter Serpentinenstruktur eingebaut. Beim Zusammenbau der Prüfzelle wurden die Bipolarplatten mit einem Drehmoment von 8 Nm so stark miteinander verschraubt, daß die Gasverteilerschichten inklusive der jeweiligen Katalysatorschicht auf die Dicke der Dichtungen zusammengepreßt wurden.

Als Dichtungen wurden mehrere Chemglas-Dichtungen (inkompressibles, glasfaserverstärktes PTFE) mit einer Gesamtdicke von 0,7 mm (Anode: 2 x 0,15 mm, Kathode: 2 x 0,2 mm) verwendet. Zusammen mit einer Dicke der Katalysatorschichten von jeweils 25 µm errechnet sich daraus eine Komprimierung der Gasdiffusionselektroden auf 82,3 % der ursprünglichen Dicke (k = 0,823).

### Beispiel 2:

Sämtliche Behandlungsschritte des Kohlefaservliesstoffes vom Typ SIGRACET GDL 10 von SGL Carbon Group wurden analog zu Vergleichsbeispiel 3 durchgeführt. Die Gasverteilerschichten wurden zusammen mit einer mit Katalysator beschichteten Membran entsprechend Vergleichsbeispiel 1, in eine Brennstoffzellen-Prüfzelle mit doppelter Serpentinenstruktur eingebaut. Beim Zusammenbau der Prüfzelle wurden die Bipolarplatten mit einem Drehmoment von 8 Nm so stark miteinander verschraubt, daß die Gasverteilerschichten inklusive der jeweiligen Katalysatorschicht auf die Dicke der Dichtungen zusammengepreßt wurden.

Als Dichtungen wurden mehrere Chemglas-Dichtungen (inkompressibles, glasfaserverstärktes PTFE) mit einer Gesamtdicke von 0,6 mm (Anode: 1 x 0,25 mm, Kathode: 1 x 0,35 mm) verwendet. Zusammen mit einer Dicke der Katalysatorschichten von jeweils 25 µm errechnet sich daraus eine Komprimierung der Gasdiffusionselektroden auf 71,4% der ursprünglichen Dicke (k = 0,714).

### Beispiel 3:

Sämtliche Behandlungsschritte des Kohlefaservliesstoffes vom Typ SIGRACET GDL 10 von SGL Carbon Group wurden analog zu Vergleichsbeispiel 3 durchgeführt. Die Gasverteilerschichten wurden zusammen mit einer mit Katalysator beschichteten Membran entsprechend Vergleichsbeispiel 1, in eine Brennstoffzellen-Prüfzelle mit doppelter Serpentinenstruktur eingebaut. Beim Zusammenbau der Prüfzelle wurden die Bipolarplatten mit einem Drehmoment von 8 Nm so stark miteinander verschraubt, daß die Gasverteilerschichten inklusive der jeweiligen Katalysatorschicht auf die Dicke der Dichtungen zusammengepreßt wurden.

Als Dichtungen wurden mehrere Chemglas-Dichtungen (inkompressibles, glasfaserverstärktes PTFE) mit einer Gesamtdicke von 0,52 mm (Anode: 1 x 0,2 mm, Kathode: 1 x 0,32 mm) verwendet. Zusammen mit einer Dicke der Katalysatorschichten von jeweils 25 µm errechnet sich daraus eine Komprimierung der Gasdiffusionselektroden auf 61,2 % der ursprünglichen Dicke (k = 0,612).

### Elektrochemische Prüfungen:

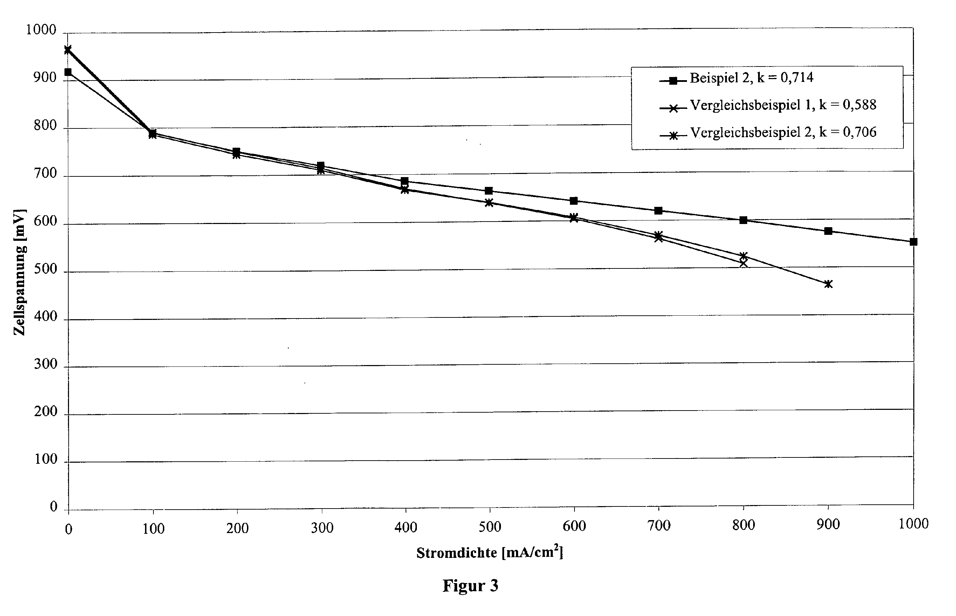

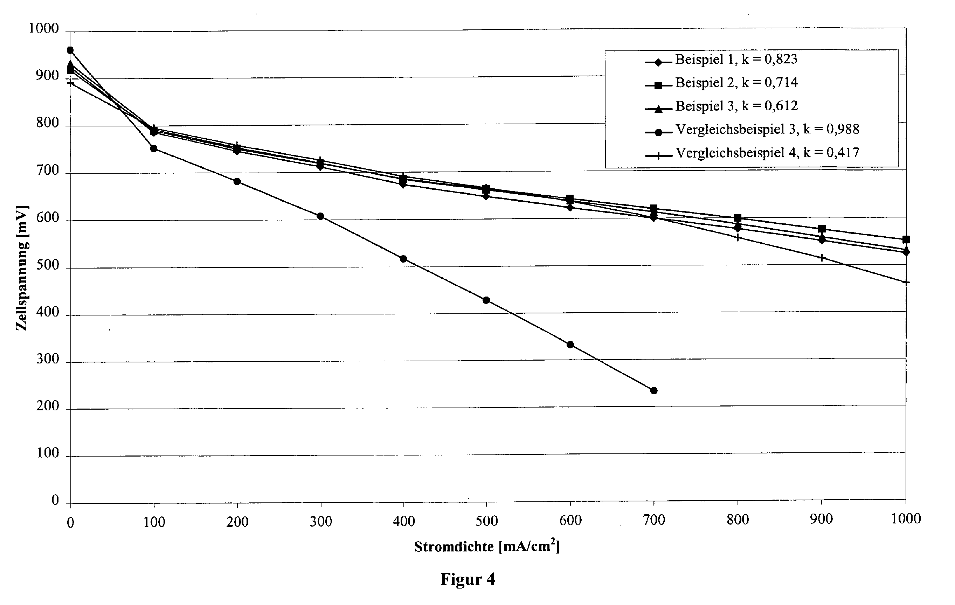

Die gemessenen Spannungen der Brennstoffzellen gemäß den Vergleichsbeispielen 1 und 2 sowie von Beispiel 2 im Reformat/Luftbetrieb in Abhängigkeit von der Stromdichte sind in Figur 3 dargestellt. Die entsprechenden Meßergebnisse für die Brennstoffzellen der Vergleichsbeispiele 3 und 4 und der Beispiele 1 bis 3 sind in Figur 4 dargestellt. Die Zelltemperatur betrug 75 °C. Der Arbeitsdruck der Reaktivgase war 1 bar. Der Wasserstoffgehalt des Reformats war 48 Vol.-%. Die CO-Konzentration betrug 50 ppm. Zur Erhöhung der Leistung der Brennstoffzelle wurde dem Anodengas 3 Vol.-% Luft zugesetzt.

Figur 3 zeigt, daß die erfindungsgemäße Brennstoffzelle von Beispiel 2 eine deutlich verbesserte elektrische Leistung bei etwa gleichem Kompressionsfaktor wie die Brennstoffzelle von Vergleichsbeispiel 2 aufweist. Es wird deutlich, daß die Kompression einer hydrophobierten Gasverteilerschicht ohne Ruß/PTFE-Ausgleichsschicht eine Verbesserung im Vergleich zu den dargestellten hydrophobierten Gasverteilerschichten mit Ausgleichsschicht bei verschiedenen Kompressionsgraden liefert. Bei diesen führt eine verstärkte Kompression nicht zu einer Verbesserung der Leistungsdaten.

Tabelle 1 zeigt die bei einer Belastung der Zellen mit einer Stromdichte von 600 mA/cm² noch gemessenen Zellspannungen.

**Tabelle 1:**

| Zellspannungen im Reformat/Luftbetrieb bei 600 mA/cm² | |
|---|---|
| Beispiel | Zellspannung [mV] |
| Vergleichsbeispiel 1 | 605 |
| Vergleichsbeispiel 2 | 608 |
| Vergleichsbeispiel 3 | 332 |
| Vergleichsbeispiel 4 | 637 |
| Beispiel 1 | 623 |
| Beispiel 2 | 642 |
| Beispiel 3 | 638 |

Figur 4 zeigt die Leistungskurven der Beispiele 1, 2, und 3 und der Vergleichsbeispiele 3 und 4. Alle hydrophobierten Gasverteilerschichten in diesen Beispielen wurden ohne Beschichtung mit einer Ausgleichsschicht eingesetzt. Der Kompressionsgrad in diesen Beispielen und Vergleichsbeispielen variiert von 0,988 bis 0,417. Bei einem Kompressionsgrad von 0,988 (geringe Kompression) sinkt die Zellspannung bei hohen Stromdichten wegen eines schlechten Kontaktes zwischen den Reaktionsschichten und den Gasverteilerschichten stark ab. Mit steigender Kompression der Brennstoffzellenstapel nimmt die Leistung der Brennstoffzellen zunächst zu. Zwischen einem Kompressionsgrad von 0,823 und 0,612 erhält man sehr gute Leistungswerte. Der Kompressionsgrad mit der besten Leistungscharakteristik liegt bei 0,714.

Im Falle von Vergleichsbeispiel 4 (Kompression auf 41,7% der ursprünglichen Dicke, k=0,417) ist allerdings zu beachten, daß die offene Zellspannung unter 900 mV sinkt, was Leckagen anzeigt. Die Brennstoffzelle wird in diesem Fall zu stark komprimiert, wobei die Membran durch die Fasern der Gasverteilerschicht mechanisch verletzt wird. Auch im Bereich der hohen Stromdichten ab 700 mA/cm² zeigt sich die negative Auswirkung zu starker Kompression. Die Gasdiffusion wird behindert. Die Leistung nimmt ab. Bei längerem Betrieb dieser Brennstoffzelle besteht die Gefahr, daß es durch Bildung von Hotspots an den Leckstellen zu einem Totalausfall der Brennstoffzelle führt.

## Patentansprüche

1. PEM-Brennstoffzellenstapel aus einer oder mehreren übereinander angeordneten Brennstoffzellen (1), die jeweils eine Membran-Elektrodeneinheit (2) und elektrisch leitfähige Bipolarplatten (3, 4) enthalten, wobei die Membran-Elektrodeneinheiten jeweils eine Polymerelektrolyt-Membran (5) aufweisen, die auf jeder Seite jeweils mit einer Reaktionsschicht (6, 7) in Kontakt steht, wobei die Reaktionsschichten eine geringere flächige Ausdehnung als die Polymerelektrolyt-Membran besitzen und zwischen jeder Reaktionsschicht und den angrenzenden Bipolarplatten im wesentlichen deckungsgleich zu den Reaktionsschichten jeweils eine kompressible, grobporige Gasverteilerschicht (8, 9) aus Kohlefaservliesstoff angeordnet ist und im Bereich außerhalb der durch die Gasverteilerschichten abgedeckten Fläche Dichtungen (11, 12) eingefügt sind, wobei die durch die Reaktionsschichten und die Gasverteilerschichten gebildeten Gasdiffusionselektroden im unbelasteten Zustand eine Dicke D₁ und die Dichtungen eine Dicke D₂ aufweisen,
**dadurch gekennzeichnet,**
**daß** die Gasdiffusionselektroden im PEM-Brennstoffzellenstapel auf 50 bis 85 % ihrer ursprünglichen Dicke komprimiert sind (Kompressionsfaktor k = 0,5 bis 0,85) und die Gasverteilerschichten auf der jeweils den Reaktionsschichten zugewandten Seiten nicht mit einer Ausgleichsschicht beschichtet sind.

2. PEM-Brennstoffzellenstapel nach Anspruch 1,
**dadurch gekennzeichnet,**
**daß** die Porosität der eingesetzten Gasverteilerschichten durch Kompression auf 50 bis 85% ihrer ursprünglichen Porosität verringert wird.

3. PEM-Brennstoffzellenstapel nach Anspruch 1,
**dadurch gekennzeichnet,**
**daß** die Dichtungen aus inkompressiblem Material bestehen und die Gasdiffusionselektroden im Brennstoffzellenstapel auf die Dicke der Dichtungen komprimiert sind, so daß sich für die Komprimierung der Gasdiffusionselektroden ein Kompressionsfaktor k=D₂/D₁ ergibt.

4. PEM-Brennstoffzellenstapel nach Anspruch 3,
**dadurch gekennzeichnet,**
**daß** die Dichtungen auf der jeweiligen Anodenseite eine Dicke D_{A} und auf der jeweiligen Kathodenseite eine Dicke D_{K} aufweisen und der Kompressionsfaktor der Gasdiffusionselektroden durch k = (D_{A} + D_{K})/2D₁ gegeben ist.

5. Verfahren zur Herstellung eines PEM-Brennstoffzellenstapels nach Anspruch 3 oder 4,
**dadurch gekennzeichnet,**
**daß** nach dem Übereinanderstapeln der Brennstoffzellen die Gasdiffusionselektroden im Brennstoffzellenstapel auf die Dicke der Dichtungen zusammengepreßt werden.

6. Gasverteilerschicht für PEM-Brennstoffzellenstapel,
**dadurch gekennzeichnet,**
**daß** die Gasverteilerschicht aus einem kompressiblen, grobporigen Kohlefaservliesstoff aufgebaut ist und im Brennstoffzellenstapel auf 50 bis 85 % ihrer ursprünglichen Dicke komprimiert ist.

7. Elektroautomobil, welches ein Brennstoffzellenaggregat zur elektrischen Energieversorgung enthält,
**dadurch gekennzeichnet,**
**daß** das Brennstoffzellenaggregat PEM-Brennstoffzellenstapel nach einem der Ansprüche 1 bis 5 enthält.
